# EUROPEAN PATENT SPECIFICATION

(11) **EP 2 644 461 B1**
(45) Date of publication and mention of the grant of the patent: **10.09.2014**
(21) Application number: 13161029.7
(22) Date of filing: 26.03.2013
(51) Int. Cl.: B60R 99/00, B60R 16/02

(54) **System and method to authenticate an automotive engine device**
System und Verfahren zur Authentifizierung einer Kraftfahrzeugmotorvorrichtung
Système et procédé pour authentifier un dispositif de moteur d'automobile

(30) Priority: 28.03.2012 US 201213432520
(43) Date of publication of application: 02.10.2013
(73) Proprietor: Delphi Technologies, Inc., Troy, MI 48007 (US)
(72) Inventor: Erickson, Clinton W., Russiaville, IN 46979 (US); Schten, Karl A., Kokomo, IN 46901 (US); Husted, Larry L., Lake Orion, MI 48359 (US)
(74) Representative: Allain, Michel Jean Camille

(56) References cited:
- EP-A2- 1 108 631
- DE-A1-102005 024 818
- DE-A1-102007 035 351
- DE-A1-102009 010 523
- US-A1- 2005 125 655

## Description

### TECHNICAL FIELD OF INVENTION

This disclosure generally relates to an automotive device used for controlling an engine, and more particularly relates to communicating an authentication code from the device to the engine controller to determine that an automotive device such as an oxygen sensor is an authentic automotive device, i.e. is not a counterfeit automotive device.

### BACKGROUND OF INVENTION

In order for vehicles to comply with emission regulations, it is important that automotive devices such as sensors, actuators, and controllers used by the vehicle emission control systems are authentic. That is, that the devices meet original-equipment-manufacturer (OEM) performance and quality specifications, and are not unauthorized copies, sometimes referred to as black-market automotive parts, parts that may not meet the OEM specifications. It has been suggested that identification codes be stored in the automotive device so that when a replacement device is installed on an emission control system, an engine controller of that system can be operated by an external device such as a lap-top computer into a learn mode in order to recognize the new identification code. However, this is undesirable because of the added cost and complexity of providing and operating the external device.

Also, it is recognized that some automotive devices (e.g. sensors, actuators) used on engines exhibit enough inherent variability due the materials and/or processes used to manufacture the devices that further processing (e.g. calibration) to minimize that variability is necessary. It has been suggested that calibration information could be stored in the automotive device in the same manner as the above mentioned identification code, and that calibration information could be used to correct or compensate automotive device. Unfortunately, it may be possible for third parties to either copy, defeat, or modify the calibration information in order to change the operation of the sensor, or duplicate the calibrations in order to fabricate parts that are not authentic. German Patent Publication DE 102007035351 discloses a method of authenticating vehicle components.

### SUMMARY OF THE INVENTION

The invention relates to an automotive device according to claim 1 or 2 and a method according to claim 5. In accordance with one embodiment, an automotive device configured to cooperate with an engine controller for controlling an engine is provided. The automotive device is equipped with a memory configured to communicate an identification code of the device to an engine controller. The memory is also configured to communicate an authentication code to the engine controller. The authentication code is based on the identification code and an encryption algorithm. The device further comprises a sensor configured to detect an engine parameter and output a parameter signal indicative of the engine parameter. The memory is further configured to store calibration information indicative of a relationship between the parameter signal and the engine parameter, and said authentication code is further based on the calibration information.

The device further comprises an actuator configured to operate an engine function in response to a control signal from the engine controller. The memory is further configured to store calibration indicative of a relationship between the control signal and the engine function, and said authentication code is further based on the calibration information.

In accordance with one embodiment, an engine control system is provided. The engine control system includes an engine controller and an automotive device. The automotive device is configured to cooperate with the engine controller for controlling an engine. The automotive device includes a memory configured to communicate an identification code of the device to the engine controller, and communicate an authentication code to the engine controller. The authentication code is based on the identification code and an encryption algorithm.

The engine controller is configured to determine a verification code based on the identification code, and compare the verification code to the authentication code effective to determine if the device is authentic. The device is further configured to communicate calibration information to the engine controller, and said verification code is further based on the calibration information.

In another embodiment, a method of authenticating an automotive device connected to an engine control system is provided. The method includes the step of providing a memory configured to store an identification code of an automotive device. The method also includes the step of storing an authentication code in the memory. The authentication code is based on the identification code and an encryption algorithm. The method also includes the step of determining a verification code by an engine controller connected to the automotive device. The verification code is based on the identification code. The method also includes the step of comparing the authentication code to the verification code. The method also includes the step of and indicating that the automotive device is not authentic if the authentication code does not correspond to the verification code.

The said method further comprises determining calibration information for the automotive device, and wherein said verification code is further based on the calibration information.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a diagram if an engine control system equipped with an automotive device and an engine controller in accordance with one embodiment;
Fig. 2 is a table illustrating a data format for storing information in a memory of the automotive device of Fig. 1 in accordance with one embodiment; and
Fig. 3 is a flowchart of a method of operating the engine control system of Fig. 1 in accordance with one embodiment.

### DESCRIPTION OF THE PREFERRED EMBODIMENT

Described herein is a way to verify that an automotive device such as an oxygen sensor is authentic. As used herein, authentic means that there is evidence that the automotive device was manufactured or supplied by a known or authorized entity. If the part is authentic, then the expectation is that a vehicle emission control system will control an engine in such a way as to not produce excessive emissions. Also, as will become apparent in the description that follows, authenticating an automotive device will be automatic, meaning that a new or replacement device can be installed without special equipment (e.g. laptop computer), or special skills to operate the special equipment.

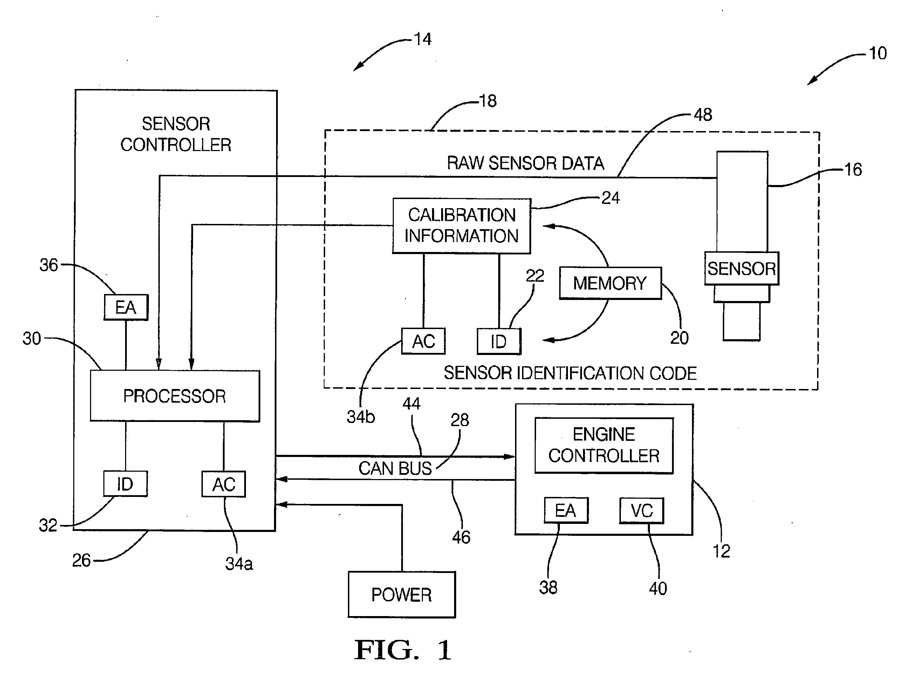

Fig. 1 illustrates a non-limiting example of an emission control system or engine control system, hereafter often system 10. While not specifically illustrated, it is understood that the system 10 may include an internal combustion engine having one or more cylinders, an exhaust system that includes an exhaust pipe and a catalytic convertor, one or more fuel injectors, an exhaust gas recirculation (EGR) valve, an air meter, an air temperature sensor, a crank position sensor, and the like. As is illustrated, the system 10 may include an engine controller 12, sometimes called an engine control unit (ECU) or an engine control module (ECM).

The engine controller 12 may include a processor such as a microprocessor or other control circuitry as should be evident to those in the art. The engine controller 12 may include memory, including non-volatile memory, such as electrically erasable programmable read-only memory (EEPROM) for storing one or more routines, thresholds and captured data. The one or more routines may be executed by the processor to perform steps for determining if signals received by the engine controller 12 for controlling the system 10 as described herein. Typically, the engine controller 12 receives signals from one or more automotive device 14. The automotive device 14 may be any one of various sensors configured to monitor or detect a parameter (e.g. temperature, pressure, position, speed, exhaust gas composition, etc.), or actuators (e.g. fuel injector EGR valve, throttle position, cam angle, etc.).

In this non-limiting example, the automotive device 14 includes a sensor 16, such as an exhaust oxygen sensor (EOS), and so is configured to output a parameter signal 44 indicative of an engine parameter, in this example exhaust gas composition. The sensor 16 may be part of a sensor assembly 18 that may include memory 20. The memory 20 may be configured to store a sensor identification code 22 and/or calibration information 24. The sensor identification code 22 may be, or include a serial number, date code, manufacturing part number, manufacturing site information, or any other information that may be useful to track or classify the sensor 16 and/or the sensor assembly 18. The calibration information 24 may include, for example, one or more correction coefficients useful to compensate raw sensor data 48 output by the sensor 16 so that an engine parameter (e.g. exhaust gas composition) detected by the sensor 16 can be accurately known by the engine controller 12. The correction coefficients may be piecewise linear coefficients useful to compensate the raw sensor data 48 in a piecewise linear fashion, or they may be temperature compensation values as will be understood by those skilled in the art. The memory 20 may be configured to communicate the sensor identification code 22 and/or the calibration information 24 of the automotive device 14 directly to the engine controller 12, or the information may be processed and/or buffered by a sensor controller 26.

The sensor controller 26 is an optional part of the system 10 that is generally configured to provide an interface between the engine controller 12 and the sensor 16. By way of example and not limitation, the raw sensor data 48 may be an analog voltage type signal, and the sensor controller 26 may transform that analog signal into a digital form that can be sent to the engine controller 12 on a controller area network (CAN) connection or CAN Bus 28. The sensor controller 26 may also be configured to receive the calibration information 24 from the sensor assembly 18 and use that calibration information to correct, compensate, or otherwise adjust the engine parameter indicated by the raw sensor data 48 from the sensor 16. Like the engine controller 12, the sensor controller 26 may include a processor 30 such as a microprocessor or other control circuitry as should be evident to those in the art. The sensor controller 26 may include memory configured to store a controller identification code 32. Like the sensor identification code 22 in the sensor assembly 18, the controller identification code 32 may include a serial number, manufacturing date, or part number of the sensor controller 26. One or more routines may be executed by the processor 30 to perform steps for determining signals to be sent to the engine controller 12 as described herein.

The sensor assembly 18 and/or the sensor controller 26 may also be configured to determine and/or communicate an authentication code 34a, 34b to the engine controller 12 for the purpose of establishing or verifying the authenticity of the automotive device 14. In order to make it difficult to copy, counterfeit, or otherwise duplicate the automotive device 14, the authentication code 34a, 34b may be, for example, generated by an encryption algorithm 36 that uses the sensor identification code 22 and/or the controller identification code 32 as a seed value for the encryption algorithm 36. The encryption algorithm 36 may be software executed by the processor 30, or a hardware based component, or a combination of hardware and software, and numerous encryption algorithms are known in the art. It should be recognized that the authentication code 34a, 34b would be uniquely matched to whatever identification code was used as a seed value for the encryption algorithm. It may be advantageous to store the same value as the authentication code 34a and the authentication code 34b so that once the sensor assembly 18 and the sensor controller 26 are assembled to form the automotive device 14, the two parts cannot be separately replaced or independently duplicated.

In order for the engine controller 12 to be able to authenticate the automotive device 14 so the automotive device 14 can to cooperate with the engine controller 12 for controlling an engine, the engine controller 12 may also be equipped with a complementary encryption algorithm 38 configured to generate a verification code 40 that can compared to the authentication code 34a or 34b. In one embodiment, the sensor identification code 22 and/or the controller identification code 32, or a combination of the two identification codes may be communicated to the engine controller 12, along with the authentication code 34a and/or 34b, where the complementary encryption algorithm 38 may use the communicated identification code as a seed value. Then, by way of example and not limitation, the encryption algorithm 36 and the complementary encryption algorithm 38 may be configured so the authentication code 34a, 34b, or combination thereof exactly matches the verification code 40. Alternatively, codes may not exactly match, but when combined in some manner such as addition or subtraction, the resulting combination is readily examined to determine or verify that the automotive device 14 is authentic.

By using the identification codes (22, 32) as a seed value for the complementary encryption algorithm 38, the engine controller 12 is able to determine the authenticity of the automotive device 14 without any supporting action from some other means such as using a lap top computer to operate the engine controller 12 into a learn mode. It should be recognized that the specifics of the encryption algorithm 36 and the complementary encryption algorithm would be held in secret by the manufacturer or supplier of the automotive device in order to prevent counterfeiting of the automotive device 14.

In another embodiment the calibration information 24 may be used as a seed value for the encryption algorithm 36 and complementary encryption algorithm 38, either alone or in combination with the sensor identification code 22 and/or the controller identification code 32. Adding the calibration information 24 to the identification codes increases the number of digits or length of the seed value, and so increases the security of the authentication code 34a and/or 34b, and the verification code 40 by way of increased complexity.

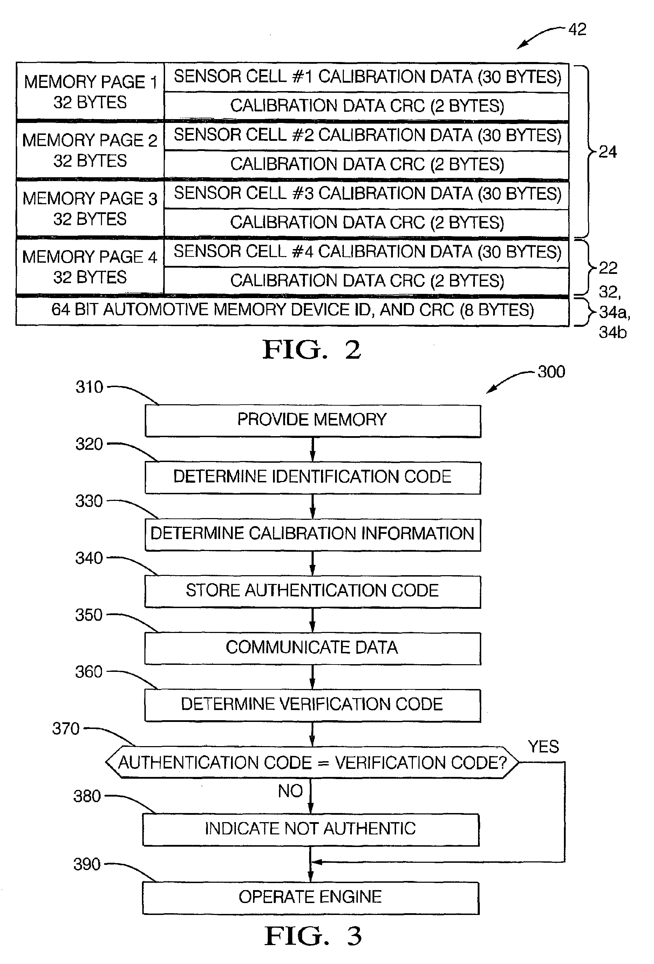

Fig. 2 illustrates a non-limiting example of a data format 42 for storing data in memory and/or transmitting data on the CAN bus 28. By way of example and not limitation, the calibration information 24 stored in memory 20 (Fig. 1) is illustrated as having three cells (Sensor Cell #1, Sensor Cell #2, and Sensor Cell #3) that may be correction coefficients for three distinct ranges of the raw sensor data 48. Each cell may also include a calibration data cyclic redundancy check (CRC). This is a commonly used mathematically based error-detecting method used in digital data transmission. CRCs are typically useful to detect common errors caused by noise in the data transmissions. The data format may also include the sensor identification code 22, and a block of data generally described at an automotive device ID that may include the controller identification code 32 and the authentication code 34a and/or 34b.

The example illustrated in Fig. 1 is generally directed toward a sensor. However, it is recognized that the automotive device 14 may an actuator or other device configured to operate an engine function in response to a control signal 46 on the CAN bus 28 that is output by the engine controller 12, for example a fuel injector. For the case of a fuel injector, the control signal may indicate that the fuel injector is to be turned on or turned off, or that the fuel injector is to be turned on for a specified period of time. For the same reasons given above, it may be preferable to authenticate a fuel injector connected to the system 10 using various information to seed the various encryption algorithms. Furthermore, it may be desirable to have calibration information for the specific fuel injector so that, for example, a fuel injection pulse width signal output by the engine controller 12 could be compensated for the specific fuel injector's individual performance characteristics.

Fig. 3 illustrates a non-limiting example of a method 300 of authenticating an automotive device 14 connected to an engine control system 10.

Step 310, PROVIDE MEMORY, may include providing a memory 20 configured to store a sensor identification code 22 of an automotive device 14. In one embodiment, the memory 20 may be located in a sensor assembly 18 that only includes the memory 20 and a sensor 16. With this arrangement the sensor 16 can be tested, the raw sensor data 48 may then be compared to an expected sensor profile, and the calibration information 24 indicative of the difference between the raw sensor data 48 and the expected profile can be stored. This calibration process may also include assigning a serial number, date code, or other tracking information to the sensor assembly 18 being calibrated or tested, and storing that information in the form of a sensor identification code 22 in the memory 20.

Step 320, DETERMINE IDENTIFICATION CODE, may include the sensor controller 26 being electrically coupled to the sensor assembly 18 so that the sensor identification code 22 can be recalled from the memory 20 and used as a seed value for the encryption algorithm 36 to determine an authentication code 34a or 34b and store that authentication code either in the sensor assembly 18 or the sensor controller 26. The step 320 is generally part of a manufacturing process of the automotive device 14, and so is understood to be distinct from step 360 described below. In an alternative embodiment the controller identification code 32 may be used instead of or in conjunction with the sensor identification code 22 to provide a seed value for the encryption algorithm 36.

Step 330, DETERMINE CALIBRATION INFORMATION, is an optional step that may include recalling calibration information 24 for the automotive device 14 for use as a seed value for the encryption algorithm 36 to determine an authentication code 34a or 34b. The calibration information 24 may be used instead of, or in combination with, the sensor identification code 22 and/or the controller identification code 32, and store that authentication code either in the sensor assembly 18 or the sensor controller 26. By combining the calibration information 24 with the sensor identification code 22 and/or the controller identification code 32, the uniqueness of the seed value is increased and so overall security of automotive device 14 may be increased.

Step 340, STORE AUTHENTICATION CODE, may include storing an authentication code 34b in the memory 20. As suggested above, the authentication code 34b may be based on any combination of the sensor identification code 22, the controller identification code 32, and the calibration information 24. Alternatively, the authentication code 34a may be stored in the sensor controller 26 in addition to, or instead of, the authentication code 34b. By redundantly storing the same value as the authentication code 34a and the authentication code 34b, the sensor assembly 18 and the sensor controller 26 are matched and so cannot be independently replaced with a counterfeit part. The prior steps generally describe a manufacturing, calibration, or assembly process for forming the automotive device, while the following steps generally describe steps that occur after the automotive device 14 is electrically coupled with the engine controller 12 either as part of an initial vehicle assembly, or as part of installing a replacement of the automotive device 14 in the vehicle.

Step 350, COMMUNICATE DATA, may include the automotive device 14 communicating any combination of the sensor identification code 22, the controller identification code 32, the calibration information 24, the authentication code 34a, and the authentication code 34b to the engine controller.

Step 360, DETERMINE VERIFICATION CODE, may include determining a verification code 40 by an engine controller 12 connected to the automotive device 14, wherein said verification code 40 is based on any combination of the sensor identification code 22, the controller identification code 32, the calibration information 24, the authentication code 34a, and the authentication code 34b to the engine controller.

Step 370, AUTHENTICATION CODE = VERIFICATION CODE?, may include comparing the authentication code 34a and/or 34b to a verification code 40. The comparison may determine if the values of the codes are equal, or determine that when the values are combined an expected result is determined. If the test result is NO, e.g. the authentication code 34a and/or 34b does not match the verification code 40, then there is an indication that the automotive device 14 is not authentic, i.e. is a counterfeit part. In this case the method 300 proceeds to step 380. If the test result is YES, the method 300 proceeds to step 390.

Step 380, INDICATE NOT AUTHENTIC, may include indicating that the automotive device 14 is not authentic by activating a 'service engine soon' indicator, or preventing the engine from running.

Step 390, OPERATE ENGINE, may include allowing the engine to operate.

Accordingly, an automotive device 14 that can be automatically authenticated, a system 10 of authenticating an automotive device, and a method 300 of authenticating an automotive device is provided. It may preferable that the automotive device 14 be authenticated every time the vehicle engine is started, however it is recognized that other intervals and events may be suitable for performing the authentication test described herein. Authenticating the automotive device 14 is desirable because it helps to prevent counterfeiting or make the automotive device 14 tamper resistant, particularly with regard to unauthorized changing or duplication of the calibration information 24. Advantageously, authenticating the automotive device 14 will be done autonomously by the engine controller 12 without prompting by a technician using special equipment such as a laptop computer.

The confidential encryption algorithm 36 may alternatively reside within the manufacturing equipment used to assemble and/or calibrate the automotive device 14 in order to generate the authentication code 34a, 34b. The same or complementing confidential encryption algorithm may reside in the sensor controller 26 to read the memory 20 contents and calculate a corresponding authentication code 34a, 34b. The comparison of the engine controller 12 calculated verification code 40 may be by way of reading the authentication code 34a or 34b read from the memory 20 that may contain a non-alterable unique ID number.

While this invention has been described in terms of the preferred embodiments thereof, it is not intended to be so limited, but rather only to the extent set forth in the claims that follow.

## Claims

1. An automotive device (14) configured to cooperate with an engine controller (12) for controlling an engine, said device (14) comprising:
a memory (20) configured to communicate an identification code (32) of the device (14) to an engine controller (12), and communicate an authentication code (34) to the engine controller (12), wherein said authentication code (34) is based on the identification code (32) and an encryption algorithm (36),
wherein said device (14) further comprises a sensor (16) configured to detect an engine parameter and output a parameter signal (44) indicative of the engine parameter, and **characterised in that**
said memory (20) is further configured to store calibration information (24) indicative of a relationship between the parameter signal (44) and the engine parameter, and said authentication code (34) is further based on the calibration information (24).

2. An automotive device (14) configured to cooperate with an engine controller (12) for controlling an engine, said device (14) comprising:
a memory (20) configured to communicate an identification code (32) of the device (14) to an engine controller (12), and communicate an authentication code (34) to the engine controller (12), wherein said authentication code (34) is based on the identification code (32) and an encryption algorithm (36), wherein said device further comprises an actuator configured to operate an engine function in response to a control signal from the engine controller (12), and **characterized in that** said memory (20) is further configured to store calibration indicative of a relationship between the control signal (46) and the engine function, and said authentication code (34) is further based on the calibration information (24).

3. An engine control system (10) comprising:
an engine controller (12); and
an automotive device (14) as set in any of the preceding claims.

4. The system (10) in accordance with claim 3, wherein said engine controller (12) is configured to determine a verification code (40) based on the identification code (32), and to compare the verification code (40) to the authentication code (34) effective to determine if the device is authentic.

5. A method (300) of authenticating an automotive device (14) connected to an engine control system (10), said method (300) comprising:
providing a memory (310) configured to store an identification code (22) of an automotive device (14);
storing an authentication code (340) in the memory (20), wherein the authentication code (34) is based on the identification code (32) and an encryption algorithm (36);
determining a verification code (360) by an engine controller (12) connected to the automotive device (14), wherein said verification code (40) is based on the identification code (22);
comparing the authentication code to the verification code (370); and
indicating (380) that the automotive device is not authentic if the authentication code (34) does not correspond to the verification code (40) and **characterized in that** said method (300) further comprises
determining calibration information (330) for the automotive device (14), and wherein said verification code (40) is further based on the calibration information (24).

## Patentansprüche

1. Kraftfahrzeugvorrichtung (14), die zum Kooperieren mit einem Motorsteuergerät (12) zum Steuern eines Motors konfiguriert ist, wobei die genannte Vorrichtung Folgendes aufweist:
einen Speicher (20), der zum Übermitteln eines Identifikationscodes (32) der Vorrichtung (14) an ein Motorsteuergerät (12) und zum Übermitteln eines Authentifizierungscodes an das Motorsteuergerät (12) konfiguriert ist, wobei der genannte Authentifizierungscode (34) auf dem Identifikationscode (32) und einem Verschlüsselungsalgorithmus (36) basiert,
wobei die genannte Vorrichtung (14) ferner einen Sensor (16) aufweist, der zum Erkennen eines Motorparameters und zum Ausgeben eines Parametersignals (44), das für den Motorparameter bezeichnend ist, konfiguriert ist, und **dadurch gekennzeichnet, dass**
der genannte Speicher (20) ferner zum Speichern von Kalibrierungsinformationen (24) konfiguriert ist, die für eine Beziehung zwischen dem Parametersignal (44) und dem Motorparameter bezeichnend ist, und der genannte Authentifizierungscode (34) ferner auf den Kalibrierungsinformationen (24) basiert.

2. Kraftfahrzeugvorrichtung (14), die zum Kooperieren mit einem Motorsteuergerät (12) zum Steuern eines Motors konfiguriert ist, wobei die genannte Vorrichtung (14) Folgendes aufweist:
einen Speicher (20), der zum Übermitteln eines Identifikationscodes (32) der Vorrichtung (14) an ein Motorsteuergerät (12) und zum Übermitteln eines Authentifizierungscodes an das Motorsteuergerät (12) konfiguriert ist, wobei der genannte Authentifizierungscode (34) auf dem Identifikationscode (32) und einem Verschlüsselungsalgorithmus (36) basiert, wobei die genannte Vorrichtung ferner einen Stellantrieb aufweist, der zum Betätigen einer Motorfunktion als Reaktion auf ein Steuersignal von dem Motorsteuergerät (12) konfiguriert ist, und **dadurch gekennzeichnet ist, dass** der genannte Speicher (20) ferner zum Speichern einer Kalibrierung konfiguriert ist, die für eine Beziehung zwischen dem Steuersignal (44) und der Motorfunktion bezeichnend ist, und der genannte Authentifizierungscode (34) ferner auf den Kalibrierungsinformationen (24) basiert.

3. Motorsteuersystem (10), umfassend:
ein Motorsteuergerät (12) und
eine Kraftfahrzeugvorrichtung (14) nach einem der vorhergehenden Ansprüche.

4. System (10) nach Anspruch 3, wobei das genannte Motorsteuergerät (12) konfiguriert ist, um einen Verifizierungscode (40) auf Basis des Identifikationscodes (32) zu ermitteln und den Verifizierungscode (40) mit dem Authentifizierungscode (34) zu vergleichen, wirksam, um zu ermitteln, ob die Vorrichtung authentisch ist.

5. Verfahren (300) zum Authentifizieren einer Kraftfahrzeugvorrichtung (14), die mit einem Motorsteuersystem (10) verbunden ist, wobei das genannte Verfahren (300) Folgendes aufweist:
Bereitstellen eines Speichers (310), der zum Speichern eines Identifikationscodes (22) einer Kraftfahrzeugvorrichtung (14) konfiguriert ist,
Speichern eines Authentifizierungscodes (360) in dem Speicher (20), wobei der Authentifizierungscode (34) auf dem Identifikationscode (32) und einem Verschlüsselungsalgorithmus (36) basiert,
Ermitteln eines Verifizierungscodes (360) durch ein Motorsteuergerät (12), das mit der Kraftfahrzeugvorrichtung (14) verbunden ist, wobei der genannte Verifizierungscode (40) auf dem Identifikationscode (22) basiert,
Vergleichen des Authentifizierungscodes mit dem Verifizierungscode (370) und Anzeigen (380), dass die Kraftfahrzeugvorrichtung nicht authentisch ist, wenn der Authentifizierungscode (34) dem Verifizierungscode (40) nicht entspricht, und **dadurch gekennzeichnet, dass** das genannte Verfahren (300) ferner Folgendes aufweist:
Ermitteln von Kalibrierungsinformationen (330) für die Kraftfahrzeugvorrichtung (14), und wobei der genannte Verifizierungscode (40) ferner auf den Kalibrierungsinformationen (24) basiert.

## Revendications

1. Dispositif automobile (14) configuré pour coopérer avec un contrôleur de moteur (12) pour contrôler un moteur, ledit dispositif (14) comprenant :
une mémoire (20) configurée pour communiquer un code d'identification (32) du dispositif (14) à un contrôleur de moteur (12), et pour communiquer un code d'authentification (34) au contrôleur de moteur (12), dans lequel ledit code d'authentification (34) est basé sur le code d'identification (32) et sur un algorithme de cryptage (36),
dans lequel ledit dispositif (14) comporte en outre un capteur (16) configuré pour détecter un paramètre moteur et pour délivrer un signal de paramètre (44) indicatif du paramètre moteur, et
**caractérisé en ce que**
ladite mémoire (20) est en outre configurée pour stocker une information de calibrage (24) indicative d'une relation entre le signal de paramètre (44) et le paramètre moteur, et ledit code d'authentification (34) est en outre basé sur l'information de calibrage (24).

2. Dispositif automobile (14) configuré pour coopérer avec un contrôleur de moteur (12) pour contrôler un moteur, ledit dispositif (14) comprenant :
une mémoire (20) configurée pour communiquer un code d'identification (32) du dispositif (14) à un contrôleur de moteur (12), et pour communiquer un code d'authentification (34) au contrôleur de moteur (12), dans lequel ledit code d'authentification (34) est basé sur le code d'identification (32) et sur un algorithme de cryptage (36),
dans lequel ledit dispositif comprend en outre un actionneur configuré pour faire fonctionner une fonction moteur en réponse à un signal de commande provenant du contrôleur de moteur (12), et **caractérisé en ce que** ladite mémoire (20) est en outre configurée pour stocker un calibrage indicatif d'une relation entre le signal de commande (46) et la fonction moteur, et ledit code d'authentification (34) est en outre basé sur l'information de calibrage (24).

3. Système de contrôle moteur (10) comprenant :
un contrôleur de moteur (12) ; et
un dispositif automobile (14) selon l'une quelconque des revendications précédentes.

4. Système (10) selon la revendication 3, dans lequel ledit contrôleur de moteur (12) est configuré pour déterminer un code de vérification (40) basé sur le code d'identification (32), et pour comparer le code de vérification (40) au code d'authentification (34) avec pour effet de déterminer si le dispositif est authentique.

5. Procédé (300) pour authentifier un dispositif automobile (14) connecté à un système de contrôle moteur (10), ledit procédé (300) comprenant les étapes consistant à :
fournir une mémoire (310) configurée pour stocker un code d'identification (22) d'un dispositif automobile (14) ;
stocker un code d'authentification (340) dans la mémoire (20), tel que le code d'authentification (34) est basé sur le code d'identification (32) et sur un algorithme de cryptage (36) ;
déterminer un code de vérification (360) par un contrôleur de moteur (12) connecté à un dispositif automobile (14), tel que ledit code de vérification (40) est basé sur le code d'identification (22) ;
comparer le code d'authentification au code de vérification (370) ; et
indiquer (380) que le dispositif automobile n'est pas authentique si le code d'authentification (34) ne correspond pas au code de vérification (40), et **caractérisé en ce que** le procédé (300) comprend en outre :
l'étape consistant à déterminer une information de calibrage (330) pour le dispositif automobile (14), et
dans lequel ledit code de vérification (40) est en outre basé sur l'information de calibrage (24).
